# EUROPÄISCHE PATENTSCHRIFT

(11) **EP 2 683 283 B1**
(45) Veröffentlichungstag und Bekanntmachung des Hinweises auf die Patenterteilung: **17.12.2014**
(21) Anmeldenummer: 11708809.6
(22) Anmeldetag: 11.03.2011
(51) Int. Cl.: A47L 9/16, A47L 7/00

(54) **ZYKLONABSCHEIDER FÜR EIN SAUGREINIGUNGSGERÄT**
CYCLONE FOR A DUST COLLECTING APPARATUS
CYCLONE POUR UN ASPIRATEUR SANS SAC

(43) Veröffentlichungstag der Anmeldung: 15.01.2014
(73) Patentinhaber: Alfred Kärcher GmbH & Co. KG, 71364 Winnenden (DE)
(72) Erfinder: DEMIRTAS, Yunus, 70806 Kornwestheim (DE); GASSMANN, Jürgen, 71409 Schwaikheim (DE); SCHWARZ, Ronald, 71364 Winnenden (DE)
(74) Vertreter: Hoeger, Stellrecht & Partner Patentanwälte
(86) Internationale Anmeldenummer: PCT/EP2011/053729
(87) Internationale Veröffentlichungsnummer: WO 2012/123013

(56) Entgegenhaltungen:
- EP-A2- 1 736 089
- WO-A2-2006/102147

## Beschreibung

Die Erfindung betrifft einen Zyklonabscheider für ein Saugreinigungsgerät, insbesondere für ein Sprühextraktionsgerät oder einen Nassstaubsauger, wobei der Zyklonabscheider einen Abscheidebehälter zum Abscheiden eingesaugter Reinigungsflüssigkeit umfasst mit einem Einlass, durch den hindurch Saugluft und Reinigungsflüssigkeit unter Ausbildung eines Zyklons in einen Innenraum des Abscheidebehälters einsaugbar sind, eine in den Innenraum eintauchende und an ein Saugaggregat anschließbare Absaugleitung mit einem Auslass, durch den hindurch Saugluft aus dem Innenraum absaugbar ist, sowie eine den Auslass gegenüber Reinigungsflüssigkeit abschirmende Trennwand, wobei ein Zwischenraum zwischen einer Innenwand des Abscheidebehälters und der Trennwand vorhanden ist.

Außerdem betrifft die Erfindung ein Saugreinigungsgerät.

Ein Zyklonabscheider der eingangs genannten Art kommt bei einem Saugreinigungsgerät, insbesondere einem Sprühextraktionsgerät oder einem Nassstaubsauger zum Einsatz, um das Gemisch aus verschmutzter Reinigungsflüssigkeit und Saugluft voneinander zu trennen. Zu diesem Zweck strömt das Gemisch üblicherweise tangential in den gewöhnlich zylindrisch ausgestalteten Abscheidebehälter, so dass sich in dessen Innenraum eine Ringströmung ausbildet. Infolge der in den Innenraum eintauchenden Absaugleitung, über die der Innenraum mit Unterdruck beaufschlagbar ist, verläuft die Ringströmung schraubenförmig oder spiralförmig und wird aus diesem Grund als Zyklon bezeichnet. Unter der Zentrifugalwirkung des Zyklons werden Reinigungsflüssigkeit und darin enthaltene Schmutzpartikel gegen die Innenwand des Abscheidebehälters geschleudert. Unter Einfluss einer sich an der Innenwand bildenden Wandgrenzschichtströmung sowie unter Schwerkrafteinfluss kann die Reinigungsflüssigkeit mit den Schmutzpartikeln einem Reservoir am Boden des Abscheidebehälters zufließen. Das Reservoir kann durch eine mit Öffnung versehene Trennwand, etwa einen Zwischenboden, vom restlichen Innraum des Abscheidebehälters abgetrennt sein, um zu verhindern, dass abgeschiedene Reinigungsflüssigkeit aus dem Reservoir abgesaugt wird. Damit in den Innenraum eingesaugte Reinigungsflüssigkeit nicht unmittelbar durch den Auslass hindurch abgesaugt wird, ist in direkter Strömungsrichtung vom Einlass zum Auslass die Trennwand vorgesehen. Die Trennwand umgibt den Auslass üblicherweise zylindrisch, und zwischen der Trennwand und der Innenwand bildet sich der Zyklon aus.

Es kann allerdings vorkommen, dass sich Flüssigkeitstropfen auf der Trennwand sammeln oder sich ein Reinigungsflüssigkeitsfilm auf der Trennwand bildet. Dies liegt beispielsweise an einem Kurzschluss der Strömung im Abscheidebehälter durch Rückstau der Strömung bei schwankender Beladung mit Reinigungsflüssigkeit oder schwankendem Öffnungsquerschnitt einer angeschlossenen Saugdüse, so dass sich die Druckverhältnisse im Abscheidebehälter ändern. Weiter führt Wandreibung des Gemisches aus Reinigungsflüssigkeit und Saugluft zu einer Grenzschichtströmung, der sogenannten "Deckelgrenzschichtströmung", die sich über eine Deckenwand des Abscheidebehälters bis zur Trennwand ausbilden kann. Dies führt weiter dazu, dass eine um den freien Rand der Trennwand herum führende Strömung entsteht. Infolgedessen werden aufgrund der die Zentrifugalkraft übersteigenden Saugwirkung Flüssigkeitströpfchen trotz Vorhandensein der Trennwand nicht abgeschieden, sondern durch den Auslass hindurch abgesaugt. Zur Vermeidung dieses bekannten Problems schlägt die EP 1 736 089 A2 vor, die Trennwand glockenförmig auszugestalten und zugleich am freien Rand ein seitliches Fenster von ungefähr 90° in Umfangsrichtung der Absaugleitung vorzusehen. Eine derartige Konstruktion der Trennwand soll dazu führen, dass die Reinigungsflüssigkeit zwar um den freien Rand der Trennwand herum in Richtung der Absaugleitung strömen kann, dann aber infolge des Zyklons rotiert und durch das Fenster hindurch tangential auf die Innenwand ausgetragen wird. Der in der EP 1 736 089 A2 beschriebene Zyklonabscheider weist allerdings eine verhältnismäßig komplizierte Konstruktion und eine nicht unbeträchtliche Größe auf.

Ein weiterer Zyklonabscheider der eingangs genannten Art ist in der EP 1 535 560 A2 beschrieben.

Die WO 2006/102147 A2 beschreibt einen Trockenstaubsauger mit einem Zwillings-Zyklonabscheider.

Aufgabe der vorliegenden Erfindung ist es, einen gattungsgemäßen Zyklonabscheider bereitzustellen, mit dem Reinigungsflüssigkeit auch unter Erzielung einer kompakten Bauweise zuverlässig abscheidbar ist.

Diese Aufgabe wird bei einem Zyklonabscheider der eingangs genannten Art erfindungsgemäß dadurch gelöst, dass der Zyklonabscheider mindestens ein zwischen der Trennwand und der Innenwand angeordnetes Überleitelement zum Überleiten von Reinigungsflüssigkeit von der Trennwand an die Innenwand umfasst, das den Zwischenraum zwischen der Trennwand und der Innenwand bis auf einen maximalen Restzwischenraum von 2 Millimetern überbrückt.

Beim erfindungsgemäßen Zyklonabscheider ist die Möglichkeit gegeben, Reinigungsflüssigkeit von der Trennwand gezielt an die Innenwand des Abscheidebehälters abzugeben, sie also von der Trennwand in die Wandgrenzschichtströmung an der Innenwand zu überführen. Hierfür sieht der Zyklonabscheider mindestens ein Überleitelement vor, mit dem der Zwischenraum zwischen der Trennwand und der Innenwand nahezu vollständig oder sogar vollständig überbrückt werden kann. In der Praxis erweist es sich als ausreichend zum Überleiten von Reinigungsflüssigkeit an die Innenwand, wenn der Restzwischenraum zwischen dem mindestens einen Überleitelement und der Innenwand und/oder zwischen dem mindestens einen Überleitelement und der Trennwand insgesamt maximal 2 Millimeter beträgt. Bei einer derartigen Größe des Restzwischenraums können Flüssigkeitströpfchen von der Trennwand an das mindestens eine Überleitelement und von diesem an die Innenwand noch abgegeben werden. Das mindestens eine Überleitelement ist vorzugsweise in Umfangsrichtung der Trennwand räumlich begrenzt, damit Reinigungsflüssigkeit, die unter Zentrifugalwirkung des Zyklons an die Innenwand geschleudert wird, diese entlang dem Reservoir an Reinigungsflüssigkeit ebenfalls zufließen kann.

In der Praxis zeigt sich, dass das Überbrücken des Zwischenraumes im Bereich des mindestens einen Überleitelementes auf den maximalen Restzwischenraum von 2 Millimetern auch bei gängigen Betriebsparametern eines den Zyklonabscheider umfassenden Saugreinigungsgerätes funktioniert. Selbst bei stark schwankenden Luftdurchsätzen durch den Zyklonabscheider von 0 bis ungefähr 16 Litern je Sekunde, Reinigungsflüssigkeitsdurchsätzen von ungefähr 0,5 bis ungefähr 1 Kilogramm je Minute, auch bei hoher Beladung und schwallartigem Transport, sowie bei Verwendung von schäumenden Reinigungsflüssigkeitszusätzen kann eine zuverlässige Ableitung von Reinigungsflüssigkeit von der Trennwand an die Innenwand gewährleistet werden. Infolge der gezielten Überleitung der Reinigungsflüssigkeit wird auch eine kompakte Bauweise des Zyklonabscheiders ermöglicht. Vorstehende Betriebsparameter konnten mit einem Zyklonabscheider erzielt werden mit einem Durchmesser der Trennwand am freien Rand von ungefähr 60 Millimetern, bei einem Durchmesser des Abscheidebehälters von ungefähr 70 Millimetern. Der dadurch kompaktbauende Zyklonabscheider eignet sich insbesondere zum Einsatz in tragbaren Saugreinigungsgeräten, speziell einem tragbaren Sprühextraktionsgerät.

Günstig ist es, wenn die Trennwand eine Wand der Absaugleitung ist. Dies vereinfacht die Konstruktion des Zyklonabscheiders. Es braucht keine die Absaugleitung umgebende gesonderte Trennwand vorgesehen zu sein, was zugleich auch eine kompaktere Bauform des Zyklonabscheiders ermöglicht.

Vorzugsweise überbrückt das mindestens eine Überleitelement den Zwischenraum bis auf einen Restzwischenraum von weniger als 2 Millimetern, insbesondere von weniger als 1 Millimeter und speziell von weniger als 0,5 Millimeter. Durch weitere Verringerung des Restzwischenraumes kann die Reinigungsflüssigkeit der Innenwand verbessert zugeleitet werden.

Besonders vorteilhaft ist es, wenn das das mindestens eine Überleitelement den Zwischenraum vollständig überbrückt. In diesem Fall ist der Restzwischenraum Null, was eine besonders gute Ableitung von Reinigungsflüssigkeit ermöglicht.

Das mindestens eine Überleitelement weist, insbesondere zur konstruktiv einfachen Umsetzung der vorstehend erwähnten Ausführungsform, günstigerweise mindestens ein Kontaktglied zum Kontaktieren der Trennwand und/oder der Innenwand auf. Dadurch wird zwischen dem mindestens einen Überleitelement und der Trennwand und/oder der Innenwand ein Kontakt gebildet, so dass Reinigungsflüssigkeit wirkungsvoll an das mindestens eine Überleitelement und/oder an die Innenwand abgeleitet werden kann.

Vorzugsweise ist das mindestens eine Kontaktglied eine Kontaktfläche. Dies ermöglicht einen flächigen Kontakt zwischen dem mindestens einen Überleitelement und der Trennwand und/oder der Innenwand und eine besonders zuverlässige Ableitung von Reinigungsflüssigkeit.

Von Vorteil ist es, wenn das mindestens eine Überleitelement streifenförmig ausgebildet ist, wobei dessen Abmessung in Umfangsrichtung der Trennwand geringer ist als in Richtung der Überleitung von Reinigungsflüssigkeit von der Trennwand an die Innenwand. Dadurch kann weitgehend vermieden werden, dass Schmutzpartikel am mindestens einen Überleitelement hängen bleiben. In der Praxis zeigt sich sogar, dass selbst Haare oder Flusen nur in geringem Ausmaß am mindestens einen Überleitelement hängen bleiben. Ferner wird der Zyklon möglichst wenig beeinträchtigt.

Bei einer konkreten Umsetzung des Zyklonabscheiders in der Praxis kann vorgesehen sein, dass das mindestens eine streifenförmig ausgebildete Überleitelement in Umfangsrichtung der Trennwand, bezogen auf sein der Innenwand zugewandtes Ende, einen Winkel von ungefähr 5° bis ungefähr 20° überdeckt, insbesondere von ungefähr 10°.

Es kann vorgesehen sein, dass das mindestens eine Überleitelement geradlinig ausgebildet ist, beispielsweise geradlinig und streifenförmig.

Bei einer andersartigen Ausführungsform des erfindungsgemäßen Zyklonabscheider kann vorgesehen sein, dass das mindestens eine Überleitelement eine Krümmung in Strömungsrichtung des Zyklons aufweist. Die von der Trennwand an das mindestens eine Überleitelement abgeleiteten Flüssigkeitstropfen unterliegen der Drallwirkung des Zyklons. Durch Krümmung des mindestens einen Überleitelementes in Strömungsrichtung des Zyklons wird die Wahrscheinlichkeit verringert, dass Reinigungsflüssigkeitströpfchen vom mindestens einen Überleitelement, während sie von der Trennwand zur Innenwand strömen, abgelöst werden und möglicherweise unmittelbar durch den Auslass abgesaugt werden. Dies ermöglicht eine noch zuverlässigere Ableitung von Reinigungsflüssigkeit an die Innenwand.

Als vorteilhaft hat sich erwiesen, wenn das mindestens eine Überleitelement mindestens eine Nut umfasst, die insbesondere ausgehend von der Trennwand in Richtung der Innenwand verläuft. In der mindestens einen Nut können sich auf Seiten der Trennwand Reinigungsflüssigkeitströpfchen sammeln und durch die Nut, die gewissermaßen einen Strömungskanal für die Reinigungsflüssigkeit bildet, gezielt der Innenwand zugeleitet werden.

Insbesondere dann, wenn das mindestens eine Überleitelement wie vorstehend erwähnt streifenförmig ausgebildet ist, hat es sich als vorteilhaft erwiesen, wenn der Zyklonabscheider eine Mehrzahl von Überleitelementen umfasst. Beispielsweise kann vorgesehen sein, dass der Zyklonabscheider ungefähr 5 bis ungefähr 15 Überleitelemente umfasst, insbesondere ungefähr 10 Überleitelemente. Die Überleitelemente sind in Umfangsrichtung der Trennwand jeweils räumlich begrenzt. Dies erlaubt es, zwischen benachbarten Überleitelementen Zwischenräume vorzusehen, durch die hindurch Reinigungsflüssigkeit dem Reinigungsflüssigkeitsreservoir zufließen kann, welche unter der Zentrifugalkraft des Zyklons an die Innenwand abgeschieden worden ist. Günstig ist es, wenn die Überleitelemente identisch ausgebildet sind, denn dies vereinfacht die Konstruktion des Zyklonabscheiders. Ferner ist dies förderlich für eine homogene Saugströmung im Zyklon. Dies wiederum wirkt sich günstig auf die zuverlässige Funktion des Zyklonabscheiders aus.

Vorzugsweise sind die Überleitelemente in Umfangsrichtung der Trennwand gleichmäßig voneinander beabstandet, so dass eine möglichst homogene Saugströmung im Zyklon erzielt werden kann und darüber hinaus Reinigungsflüssigkeit gleichmäßig von der Trennwand an die Innenwand abgegeben werden kann.

Vorteilhafterweise ist das mindestens eine Überleitelement an der Trennwand festgelegt und damit insbesondere an der Absaugleitung, wenn die Trennwand bevorzugt eine Wand der Absaugleitung ist. Dadurch kann eine konstruktiv einfache Ausgestaltung des Zyklonabscheiders erzielt werden. Von der Trennwand erstreckt sich das mindestens eine Überleitelement in Richtung der Innenwand, von der sein freies Ende maximal 2 Millimeter beabstandet ist. Am freien Ende kann das mindestens eine Überleitelement ein Kontaktglied aufweisen zum Kontaktieren der Innenwand, so dass der Restzwischenraum sogar verschwindet und Reinigungsflüssigkeit besonders zuverlässig abgeleitet werden kann.

Bei einer konstruktiv besonders einfachen Ausgestaltung des Zyklonabscheiders ist das mindestens eine Überleitelement einstückig mit der Trennwand oder einem Teil davon gebildet.

Von Vorteil ist es, wenn das mindestens eine Überleitelement an einem freien Rand der Trennwand festgelegt ist. Wie erwähnt, fließt Reinigungsflüssigkeit unter Einfluss der Grenzschichtströmung und der Drallwirkung des Zyklons die Trennwand bis zu deren freiem Rand entlang. Am freien Rand kann Reinigungsflüssigkeit das mindestens eine Überleitelement kontaktieren und in Richtung der Innenwand abgeleitet werden.

Die Trennwand kann, speziell am freien Rand, eine zumindest teilweise umlaufende Ausnehmung, etwa eine Nut, umfassen. In der Ausnehmung kann abzuleitende Reinigungsflüssigkeit gesammelt werden und beispielsweise an ein am freien Rand festgelegtes Überleitelement abgegeben werden.

Günstig ist es, wenn die Trennwand einen sich in Eintauchrichtung der Absaugleitung in den Innenraum im Umfang erweiternden Schirm umfasst oder ausbildet. Der sich erweiternde Schirm führt dazu, dass die Strömungsgeschwindigkeit des Gemisches aus Saugluft und Reinigungsflüssigkeit umso mehr ansteigt, je mehr sich der Schirm erweitert. Durch Erhöhung der Strömungsgeschwindigkeit steigt die Zentrifugalkraft auf die Reinigungsflüssigkeit, so dass diese wirkungsvoller gegen die Innenwandung abgeschieden werden kann. Auch an der Trennwand anhaftende Reinigungsflüssigkeit kann vom Zyklon aufgrund dessen höherer Strömungsgeschwindigkeit erfasst und an die Innenwand abgeführt werden. Dadurch ist die Menge an Reinigungsflüssigkeit, die an der Trennwand verbleibt, verringerbar. Diese Restmenge an Reinigungsflüssigkeit kann mittels des mindestens einen Überleitelementes gezielt an die Innenwand abgeleitet werden.

Insbesondere umfasst die Absaugleitung den Schirm, wenn die Trennwand eine Wand der Absaugleitung ist.

Vorteilhafterweise ist das mindestens eine Überleitelement sich in Verlängerung des Schirmes in Richtung der Innenwand erstreckend ausgebildet. Wie sich in der Praxis zeigt, kann dadurch ein störender Einfluss des mindestens einen Überleitelementes auf den Zyklon weitgehend vermieden werden. Insbesondere erstreckt sich das mindestens eine Überleitelement in bevorzugt geradliniger Verlängerung des Schirmes in Richtung der Innenwand.

Als vorteilhaft hat es sich erwiesen, wenn das mindestens eine Überleitelement auf einer dem Einlass zugewandten Seite des Schirms angeordnet ist, insbesondere auf einer Oberseite des Schirmes, da in der Praxis der Einlass typischerweise obenseitig am Abscheidebehälter gebildet ist. Reinigungsflüssigkeit sammelt sich auf der dem Einlass zugewandten Seite des Schirms. An dieser Seite angeordnet, kann das mindestens eine Überleitelement beispielsweise eine Kante ausbilden, die Reinigungsflüssigkeitströpfchen gewissermaßen "einfangen" kann.

Bei einer weiteren vorteilhaften Ausführungsform des erfindungsgemäßen Zyklonabscheiders kann vorgesehen sein, dass das mindestens eine Überleitelement an der Innenwand festgelegt ist. Ausgehend von der Innenwand erstreckt sich das mindestens eine Überleitelement in Richtung der Trennwand, insbesondere in Richtung einer Wand der Absaugleitung. Der Restzwischenraum zwischen dem mindestens einen Überleitelement und der Trennwand beträgt maximal 2 Millimeter und verschwindet vorzugsweise ganz, wenn das mindestens eine Überleitelement ein die Trennwand kontaktierendes Kontaktglied umfasst.

Für eine konstruktiv besonders einfache Ausgestaltung ist es von Vorteil, wenn das mindestens eine Überleitelement einstückig mit der Innenwand gebildet ist.

Vorzugsweise umfasst der Zyklonabscheider eine die Innenwand abschnittsweise ausbildende Halterung für das mindestens eine Überleitelement, die in den Abscheidbehälter lösbar einsetzbar ist. Dies erleichtert die Reinigung des Zyklonabscheiders. Die Halterung, an der das mindestens eine Überleitelement festgelegt ist, kann aus dem Abscheidebehälter gelöst, von Schmutzpartikeln befreit und anschließt erneut in den Abscheidebehälter eingesetzt werden. Auch die Montage des Zyklonabscheiders gestaltet sich einfacher.

Zur Erzielung einer konstruktiv einfachen Ausgestaltung des Zyklonabscheiders ist es von Vorteil, wenn das mindestens eine Überleitelement einstückig mit der Halterung gebildet ist.

Die Halterung ist beispielsweise ein Haltering oder umfasst einen solchen, an dem das mindestens eine Überleitelement festgelegt ist und von welchem es in Richtung der Trennwand absteht. An der Innenwand kann beispielsweise eine Stufe mit in Richtung des Innenraums vorstehendem Absatz zur Aufnahme des Halterings angeordnet sein. Eine der Mitte des Innenraums zugewandte Wandung der Halterung kann abschnittsweise die Innenwand des Abscheidebehälters ausbilden, an die die Reinigungsflüssigkeit abgeleitet wird.

Wie eingangs erwähnt, betrifft die Erfindung auch ein Saugreinigungsgerät. Der Erfindung liegt die Aufgabe zugrunde, ein Saugreinigungsgerät mit einem Zyklonabscheider bereitzustellen, mit dem Reinigungsflüssigkeit auch unter Erzielung einer kompakten Bauweise zuverlässig abscheidbar ist.

Diese Aufgabe wird durch ein Saugreinigungsgerät gelöst, das mindestens einen Zyklonabscheider der vorstehend erläuterten Art umfasst.

Mit dem erfindungsgemäßen Saugreinigungsgerät können die bereits im Zusammenhang mit der Erläuterung des erfindungsgemäßen Zyklonabscheiders sowie die im Zusammenhang mit der Erläuterung vorteilhafter Ausführungsformen des erfindungsgemäßen Zyklonabscheiders erwähnten Vorteile erzielt werden. In Bezug auf diese Vorteile wird auf vorstehende Erläuterungen verwiesen.

Bei dem erfindungsgemäßen Saugreinigungsgerät handelt es sich insbesondere um ein Sprühextraktionsgerät, es kann sich jedoch auch um einen Nassstaubsauger handeln. Der Zyklonabscheider kann aufgrund der kompakten Bauform insbesondere bei einem tragbaren Saugreinigungsgerät zum Einsatz kommen.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine Schnittansicht eines erfindungsgemäßen Saugreinigungsgerätes, umfassend eine erste bevorzugte Ausführungsform eines erfindungsgemäßen Zyklonabscheiders;
- Figur 2:: eine Schnittansicht des Zyklonabscheiders des Saugreinigungsgerätes aus Figur 1;
- Figuren 3A bis 3C:: eine perspektivische Darstellung eines Schirms mit Überleitelementen des Zyklonabscheiders aus Figur 2, eine Draufsicht auf den Schirm bzw. eine Schnittansicht längs der Linie 3C-3C in Figur 3B;
- Figuren 4A bis 7C:: Varianten des Schirms mit Überleitelementen gemäß den Figuren 3A bis 3C des Zyklonabscheiders aus Figur 2, und zwar jeweils in einer perspektivischen Darstellung, in Draufsicht bzw. in Schnittdarstellung;
- Figuren 8A und 8B:: eine weitere Variante des Schirms mit Überleitelementen gemäß den Figuren 3B und 3C des Zyklonabscheiders aus Figur 2 in einer Draufsicht bzw. in Schnittdarstellung und
- Figur 9:: eine Schnittansicht, teilweise dargestellt, einer zweiten bevorzugten Ausführungsform eines erfindungsgemäßen Zyklonabscheiders.

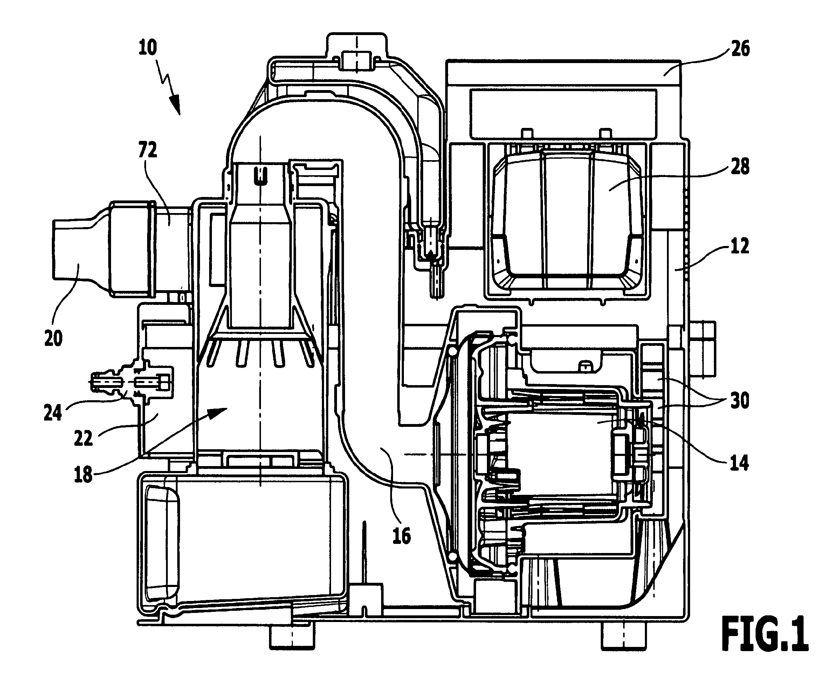

Figur 1 zeigt eine Schnittdarstellung einer bevorzugten Ausführungsform eines erfindungsgemäßen Saugreinigungsgerätes, das mit dem Bezugszeichen 10 belegt und als tragbares Sprühextraktionsgerät ausgestaltet ist.

Das Saugreinigungsgerät 10 umfasst ein Gehäuse 12, in dem ein Saugaggregat 14 aufgenommen ist. Mittels des Saugaggregates 14 kann ein Saugkanal 16 mit Unterdruck beaufschlagt werden, um Saugluft aus einem nachfolgend erläuterten Zyklonabscheider 18 abzusaugen. Eingangsseitig weist das Saugreinigungsgerät 10 ein stutzenförmiges Annschlusselement 20 für einen in der Zeichnung nicht dargestellten Saugschlauch auf, an dessen anderem Ende eine Bodendüse zur Reinigung einer Bodenfläche angeordnet ist.

Die Bodendüse kann über einen in der Zeichnung ebenfalls nicht dargestellten Versorgungsschlauch mit einer Reinigungsflüssigkeit versorgt werden, die in einem Tank 22 des Saugreinigungsgerätes bevorratet ist. Bei der Reinigungsflüssigkeit handelt es sich um Wasser, dem üblicherweise zur Steigerung der Reinigungswirkung ein Reinigungszusatz beigemischt ist. Der nicht dargestellte Versorgungsschlauch wird an ein den Tank 22 dichtendes Ventil 24 angeschlossen.

Wie erwähnt, ist das Saugreinigungsgerät 10 im gewöhnlichen Betrieb tragbar, wofür ein am Gehäuse 12 angeformter Handgriff 26 vorgesehen ist. Eine im Gehäuse 12 aufgenommene wiederaufladbare Batterie 28 dient zur Energieversorgung des Saugaggregates 14.

Orts- und Richtungsangaben wie "oben", "unten" oder dergleichen sind nachfolgend bezogen auf eine Gebrauchslage des Saugreinigungsgerätes 10 bezogen aufzufassen, wie in Figur 1 dargestellt.

Im Betrieb des Saugreinigungsgerätes 10 wird der Bodendüse über den an das Ventil 24 angeschlossenen Versorgungsschlauch Reinigungsflüssigkeit zugeführt. Unter der Wirkung des Saugaggregates 14 wird das Gemisch aus Reinigungsflüssigkeit und abgelöstem Schmutz durch den Saugschlauch hindurch in den Zyklonabscheider 18 eingesaugt, in dem wie nachfolgend erläutert die Reinigungsflüssigkeit von der Saugluft getrennt wird. Die Saugluft wird durch den Saugkanal 16 weiter abgesaugt und verlässt das Gehäuse 12 durch Öffnungen 30.

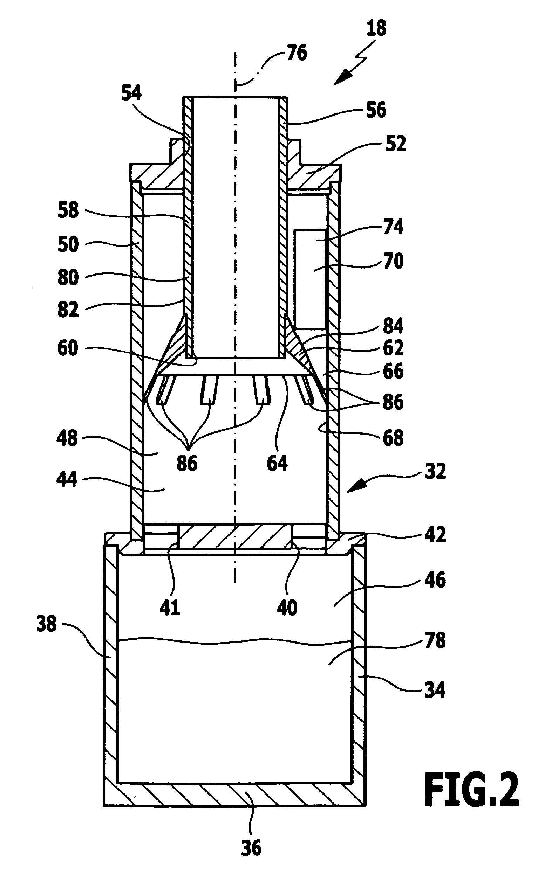

Wie insbesondere aus Figur 2 hervorgeht, umfasst die darin dargestellte bevorzugte Ausführungsform des erfindungsgemäßen Zyklonabscheiders 18 einen Abscheidebehälter 32, der untenseitig ein becherförmiges Gefäß 34 von zylindrischem Querschnitt aufweist mit einer Bodenwand 36 und einer Seitenwand 38. In Figur 1 ist das Gefäß 34 aufgrund der Lage der Schnittebene verdeckt. Auf das Gefäß 34 ist ein mit Durchgangsöffnungen 40, 41 versehener Zwischenboden 42 aufgesetzt. Der Zwischenboden 42 unterteilt einen Innenraum 44 des Abscheidebehälters 32 in einen vom Gefäß 34 eingefassten unteren Raumbereich 46 sowie einen oberen Raumbereich 48. Der obere Raumbereich 48 wird seitlich von einer Behälterwand 50 mit zylindrischem Querschnitt eingefasst, untenseitig vom Zwischenboden 42 begrenzt und obenseitig von einer Deckenwand 52.

Die Deckenwand 52 ist auf die Behälterwand 50 aufgesetzt und bildet damit zugleich eine Deckenwand des Abscheidebehälters 32. In der Deckenwand 52 ist eine zentrale Durchbrechung 54 gebildet, die von einem in den oberen Raumbereich 48 eintauchenden Rohrstück 56 formschlüssig durchgriffen wird. Das Rohrstück 56 ist an den Saugkanal 16 anschließbar, so dass der Innenraum 44 durch das Rohrstück 56 und den Saugkanal 16 hindurch mit Unterdruck beaufschlagbar ist. Das Rohrstück 56 bildet infolgedessen einen Teil einer Absaugleitung 58, die einen Auslass 60 für Saugluft aus dem Innenraum ausbildet. Der Auslass 60 ist an dem dem Zwischenboden 42 zugewandten Ende des Rohrstücks 56 gebildet.

Die Absaugleitung 58 umfasst ferner einen Schirm 62. Der Schirm 62 ist am Rohrstück 56 im Bereich von dessen dem Zwischenboden 42 zugewandten unteren Ende festgelegt, beispielsweise durch Verklemmen, Verrasten oder Verkleben. Es kann jedoch auch vorgesehen sein, dass der Schirm 62 einstückig mit dem Rohrstück 56 gebildet ist. Der Schirm 62 hat außenseitig die Kontur eines Kegelstumpfes, wobei sich der Außenumfang des Schirmes 62 in Richtung des Zwischenbodens 42 erweitert.

Der Schirm 62 weist einen dem Zwischenboden 42 zugewandten freien Rand 64 auf, an dem der Durchmesser des Schirmes 62 größer ist als der Außendurchmesser des Rohrstücks 56, aber geringer als der Innendurchmesser des Abscheidebehälters 32 im oberen Raumbereich 48. Ein Zwischenraum 66 zwischen der Absaugleitung 58 und einer Innenwand 68 der Behälterwand 50 ist am freien Rand 64 des Schirmes 62 minimal.

Bei einer konkreten Umsetzung des Zyklonabscheiders 18 in der Praxis kann vorgesehen sein, dass der Außendurchmesser des Rohrstücks 56 ungefähr 40 Millimeter beträgt, der Durchmesser des Schirmes 62 am freien Rand 64 ungefähr 60 Millimeter, und der Innendurchmesser des oberen Raumbereiches 48 ungefähr 70 Millimeter.

In der Behälterwand 50 ist nahe der Deckenwand 52 ein Einlass 70 für ein Gemisch aus verschmutzter Reinigungsflüssigkeit und Saugluft gebildet. Ein in Fortsetzung des Anschlusselementes 20 verlaufendes Rohrstück 72 (Figur 1) mündet über den Einlass 70, der ein rechteckförmiges Fenster 74 ausbildet, in den Innenraum 44. Das Rohrstück 72 ist tangential an die Behälterwand 50 angeformt, so dass das Gemisch aus Saugluft und Reinigungsflüssigkeit tangential bezüglich einer vom Zyklonabscheider 18 definierten Achse 76 in den Innenraum 44 einströmen kann. Dadurch bildet sich im Abscheidebehälter 32, speziell im oberen Raumbereich 48, ein Zyklon aus. Das Gemisch aus Saugluft und Reinigungsflüssigkeit strömt dabei zwischen der Absaugleitung 58 und der Innenwand 68 im Kreis. Die Strömung verläuft schraubenförmig in Richtung des Zwischenbodens 42, denn die Absaugleitung 58 taucht so weit in den oberen Raumbereich 48 ein, dass der Auslass 60 unterhalb des Einlasses 70 angeordnet ist.

Reinigungsflüssigkeit wird infolge der Drallwirkung des Zyklons bezüglich der Achse 76 so zentrifugal beschleunigt, dass die Reinigungsflüssigkeit an die Innenwand 68 geschleudert wird. Unter Ausbildung einer Wandgrenzschichtströmung sowie Schwerkrafteinfluss fließt die Reinigungsflüssigkeit mit dem gelösten Schmutz die Innenwand 68 in Richtung des Zwischenbodens 42 entlang. Durch die Durchgangsöffnungen 40 und 41 hindurch fließt die Reinigungsflüssigkeit in ein Reinigungsflüssigkeitsreservoir 78. Der Zwischenboden 42 hat den Zweck, Schaumentwicklung im unteren Raumbereich 46 vom oberen Raumbereich 48 fernzuhalten. Dadurch wird vermieden, dass Schaum durch den Auslass 60 hindurch abgesaugt wird. Die Schaumentwicklung beruht auf dem der Reinigungsflüssigkeit beigemischten Reinigungszusatz.

Der Schirm 62 hat den Zweck, durch Verringerung des Zwischenraumes 66 zwischen der Absaugleitung 58 und der Innenwand 68 die Strömungsgeschwindigkeit des Gemisches aus Saugluft und Reinigungsflüssigkeit im Zyklon zu erhöhen. Dadurch wird die Drallwirkung auf die Flüssigkeitströpfchen gesteigert, so dass diese verbessert an die Innenwand 68 abgeschieden und dem Reinigungsflüssigkeitsreservoir 78 zugeführt werden können.

Eine Wand 80 der Absaugleitung 58, die gebildet wird durch die Wand des Rohrstücks 56 und die Wand des Schirmes 62, bildet eine den Auslass 60 umgebende Trennwand 82 zum Abschirmen des Auslasses 60 gegenüber eingesaugter Reinigungsflüssigkeit. Die Trennwand 82 verhindert teilweise, dass eingesaugte Reinigungsflüssigkeit unmittelbar vom Einlass 70 durch den Auslass 60 hindurch in den Saugkanal 16 eingesaugt wird. Dennoch besteht in der Praxis das Problem, dass sich auf der Trennwand 82 Reinigungsflüssigkeit tropfen- oder filmförmig ansammelt. Insbesondere sammelt sich Reinigungsflüssigkeit auf einer der Deckenwand 52 und dem Einlass 70 zugewandten Oberseite 84 des Schirmes 62.

Die Ansammlung von Reinigungsflüssigkeit auf der Trennwand 82 liegt beispielsweise an einem Kurzschluss der Strömung im Abscheidebehälter 32 durch Rückstau der Strömung bei schwankender Beladung mit Reinigungsflüssigkeit oder schwankendem Öffnungsquerschnitt der angeschlossenen Bodendüse, so dass sich die Druckverhältnisse im Abscheidebehälter 32 ändern. Weiter führt Wandreibung des Gemisches aus Reinigungsflüssigkeit und Saugluft zu einer Grenzschichtströmung, der sogenannten "Deckelgrenzschichtströmung", die sich über die Deckenwand 52 bis zur Trennwand 82 ausbilden kann.

Unter der Wirkung des Zyklons im oberen Raumbereich 48 kann Reinigungsflüssigkeit auf der Oberseite dem freien Rand 64 zufließen. Ohne die nachfolgend erläuterten Überleitelemente kann diese Reinigungsflüssigkeit um den freien Rand 64 herumfließen und so unerwünschterweise durch den Auslass 60 abgesaugt werden.

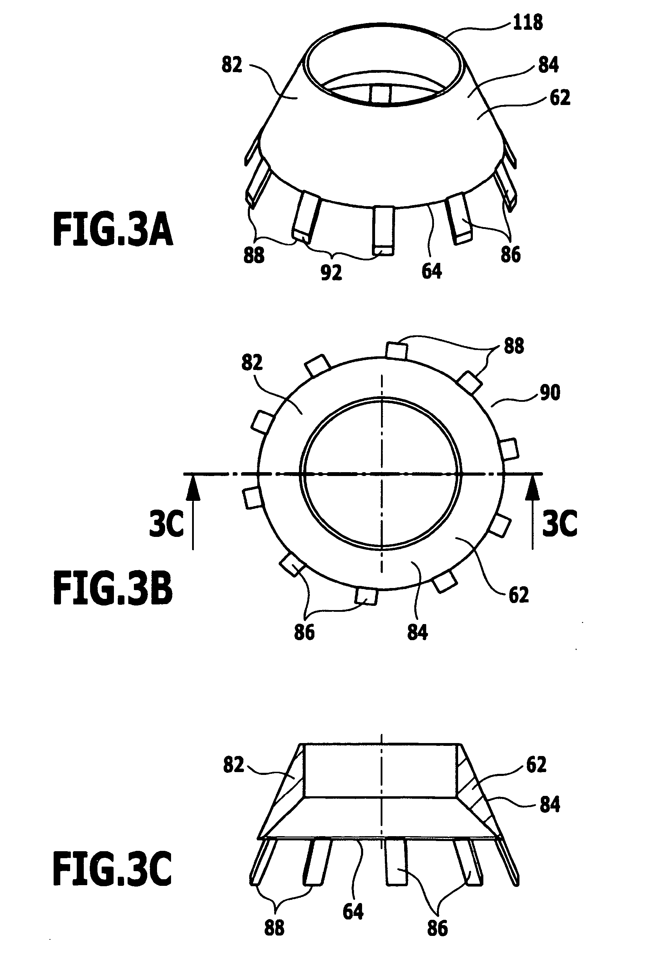

Um zu vermeiden, dass Reinigungsflüssigkeit vom freien Rand 64 unmittelbar durch den Auslass 60 abgesaugt wird, umfasst der erfindungsgemäße Zyklonabscheider 18 eine Mehrzahl von Überleitelementen 86, auf die nachfolgend unter Verweis insbesondere auf die Figuren 2 bis 3C eingegangen wird. In den Figuren 3A bis 3C ist jeweils der Schirm 62 zusammen mit den Überleitelementen 86 dargestellt.

Die Überleitelemente 86 sind ausgestaltet als am freien Rand 64 festgelegte Vorsprünge in Richtung der Innenwand 68. Die Überleitelemente 86 können einstückig mit der Trennwand 82 am Schirm 62 und damit zumindest eines Teils der Absaugleitung 58 gebildet sein. Hierfür ist der Schirm 62 beispielsweise bevorzugt aus einem Kunststoffmaterial gefertigt. Von der Gestalt her sind die Überleitelemente 86 finger- oder streifenförmig, und sie stehen vom freien Rand 64 in geradliniger Verlängerung der Oberseite 84 ab (Figur 3C). In Umfangsrichtung der Trennwand 82 bezüglich der Achse 76 des Zyklonabscheiders 18 sind die Überleitelemente 86 jeweils räumlich begrenzt, und zwar überdecken sie mit ihren der Innenwand 68 zugewandten freien Enden 88 jeweils einen Winkel von ungefähr 10°.

Insgesamt sind zehn identisch ausgestaltete Überleitelemente 86 vorgesehen, die in Umfangsrichtung der Trennwand 82 gleichmäßig voneinander beabstandet sind, so dass zwischen zwei benachbarten Überleitelementen 86 jeweils ein Zwischenraum 90 angeordnet ist, der bezüglich der Achse 76 ungefähr 30 Winkelgrade überdeckt.

An ihren freien Enden 88 weisen die Überleitelemente 86 flächige Kontaktglieder 92 zum Kontaktieren der Innenwand 68 auf. Die Länge der Überleitelemente 86 ist beim Zyklonabscheider 18 nämlich gerade so bemessen, dass die Überleitelemente 86 den Zwischenraum 66 vom freien Rand 64 bis zur Innenwand 68 vollständig überbrücken.

Die Überleitelemente 86 haben den Zweck, Reinigungsflüssigkeit, die an der Oberseite 84 anhaftet, gezielt an die Innenwand 68 abzuleiten und der Wandgrenzschichtströmung zuzuführen. Da die Überleitelemente 86 die Innenwand 68 über die Kontaktglieder 92 flächig kontaktieren, kann die Reinigungsflüssigkeit besonders zuverlässig an die Innenwand 68 abgegeben werden. An der Innenwand 68 kann die Reinigungsflüssigkeit dem Reinigungsflüssigkeitsreservoir 78 zufließen.

Da insgesamt zehn Überleitelemente 86 vorgesehen sind, kann weitgehend vermieden werden, dass Reinigungsflüssigkeit vom freien Rand 64 unmittelbar durch den Auslass 60 hindurch abgesaugt wird. Im Ansatzbereich der Überleitelemente 86 am freien Rand 64 bilden sich stattdessen Tröpfchen, die über diese abfließen können. Reinigungsflüssigkeit, die infolge der Drallwirkung des Zyklons oberhalb des freien Randes 64 an die Innenwand 68 abgeschieden wird, kann durch die hinreichend groß bemessenen Zwischenräume 90 hindurch dem Reinigungsflüssigkeitsreservoir 78 ebenfalls zufließen. In der Praxis zeigt sich, dass sich bei derartiger Ausgestaltung des Schirms 62 mit Überleitelementen 86 selbst Haare und Flusen nur in geringem Ausmaß an den Überleitelementen 86 verfangen.

Wie erwähnt, kontaktieren die Überleitelemente 86 im vorliegenden Fall die Innenwand 68. Auf diese Weise überbrücken sie den Zwischenraum 66 zwischen der Trennwand 82 und der Innenwand 68 vollständig, so dass kein Restzwischenraum im Bereich der Überleitelemente 86 vorhanden ist. Dadurch kann die Reinigungsflüssigkeit besonders zuverlässig an die Innenwand 68 abgeleitet werden.

Erfindungsgemäß ist vorgesehen, dass die Überleitelemente 86 den Zwischenraum 66 bis auf einen maximalen Restzwischenraum von 2 Millimetern überbrücken. Es zeigt sich bei Umsetzungen von Varianten des Zyklonabscheiders 18 in der Praxis, dass bei Vorsehen eines Restzwischenraumes von maximal 2 Millimetern Reinigungsflüssigkeit noch wirkungsvoll über die Überleitelemente 86 an die Innenwand 68 abgeführt werden kann. Allerdings ist es von Vorteil, wenn der Restzwischenraum kleiner ist als 2 Millimeter, insbesondere kleiner als 1 Millimeter und noch bevorzugter kleiner als 0,5 Millimeter.

Das Vorsehen der Überleitelemente 86 beim Zyklonabscheider 18 bietet den Vorteil, dass selbst bei dessen sehr kompakter Bauform das Einsaugen von Reinigungsflüssigkeit von der Trennwand 82 durch den Auslass 60 hindurch vermieden werden kann. Insbesondere kann auf verhältnismäßig große Abscheidebehälter verzichtet werden. So beträgt bei einer Umsetzung des Zyklonabscheiders 18 in der Praxis der Zwischenraum 66 zwischen der Trennwand 82 und der Innenwand 68 ungefähr 3 bis 4 Millimeter, bei dem vorstehend erwähnten Durchmesser des Abscheidebehälters 32 im oberen Raumbereich 48 von ungefähr 70 Millimetern. Der gesamte Zyklonabscheider 18 nimmt daher ein so geringes Bauvolumen ein, dass er sich sehr gut zum Einsatz in tragbaren Saugreinigungsgeräten eignet, wie dies am Beispiel des Saugreinigungsgerätes 10 dargestellt ist.

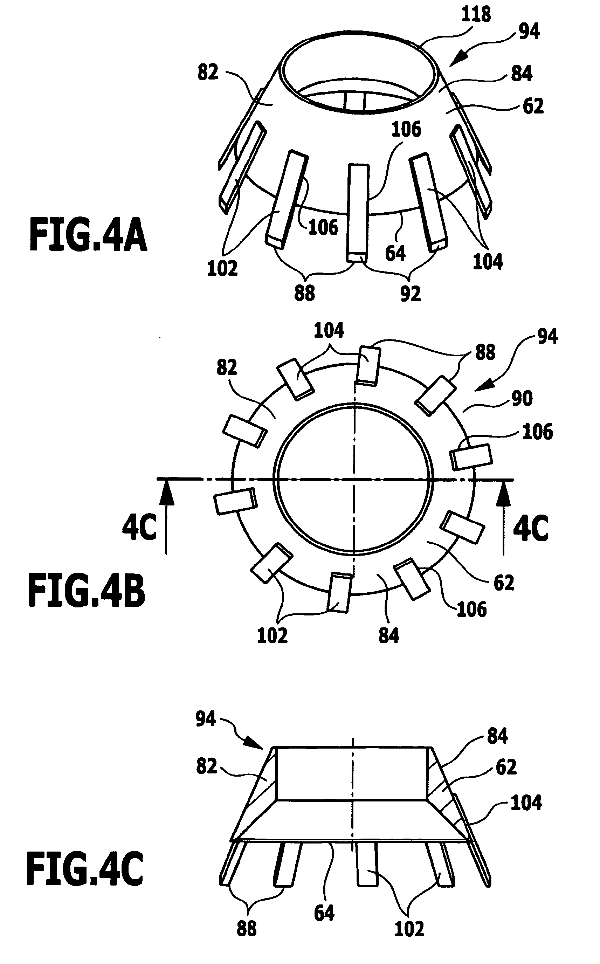

Nachfolgend wird unter Verweis auf die Figuren 4A bis 4C, 5A bis 5C, 6A bis 6C, 7A bis 7C sowie 8A und 8B auf mit den Bezugszeichen 94, 96, 98, 100 bzw. 142 bezeichnete Kombinationen des Schirms 62 mit Überleitelementen verwiesen. Die Kombinationen 94, 96, 98 und 100 umfassen jeweils den Schirm 62 und können anstelle der Kombination des Schirms 62 mit den Überleitelementen 86 gemäß den Figuren 3A bis 3C bei einer Variante des Zyklonabscheiders 18 zum Einsatz kommen. Die Kombination 142 umfasst eine mit dem Bezugszeichen 144 versehene Variante des Schirmes 62 und kann ebenfalls bei einer Variante des Zyklonabscheiders 18 zum Einsatz kommen. Gleiche oder gleichwirkende Merkmale der Schirme 62 und 144 sind mit identischen Bezugszeichen belegt.

Bei den Kombinationen 94, 96, 98 und 100 sind jeweils zehn, bei der Kombination 142 fünf Überleitelemente vorgesehen, die jeweils identisch ausgebildet sind und in Umfangsrichtung der Trennwand 82 bezüglich der Achse 76 jeweils gleichmäßig voneinander beabstandet sind. In Umfangsrichtung der Trennwand 82 überdecken sie jeweils so wie die Überleitelemente 86 an ihren der Innenwand 68 zugewandten freien Enden 88 einen Winkel von ungefähr 10°. An ihren der Innenwand 68 zugewandten freien Enden 88 weisen sie jeweils flächige Kontaktglieder 92 zum Kontaktieren der Innenwand 68 auf. Sie sind jeweils so lang bemessen, dass sie die Innenwand 68 kontaktieren, und erstrecken sich jeweils in Verlängerung des Schirmes 62.

Bei der Kombination 94 gemäß den Figuren 4A bis 4C sind Überleitelemente 102 vorgesehen, die mit ihrem dem Schirm 62 zugewandten Ende auf dessen Oberseite 84 angeordnet sind. Die Überleitelemente 102 ragen damit über die von der Oberseite 84 definierte Kegelstumpffläche heraus und bilden Rippen 104. Die Überleitelemente 102 können einstückig mit dem Schirm 62 gebildet sein. Sie können von diesem jedoch auch getrennt gebildet sein und am Schirm 62 beispielsweise durch Verkleben festgelegt sein.

Aufgrund der rippenförmigen Ausgestaltung der Überleitelemente 102 ist an der Oberseite 84 an jedem Überleitelement 102 jeweils eine Kante 106 gebildet. An den Kanten 106 kann sich an der Oberseite 84 anhaftende Reinigungsflüssigkeit unter der Drallwirkung verbessert anhäufen, d.h. die Kante 106 wirkt gewissermaßen als "Prallkante" für die Reinigungsflüssigkeit. Dies erlaubt es, die Reinigungsflüssigkeit besonders zuverlässig vom Schirm 62 an die Innenwand 68 abzuleiten.

Während die Überleitelemente 86 und 102 jeweils geradlinig ausgebildet sind, sind die Überleitelemente der nachfolgend beschriebenen Kombinationen 96, 98, 100 jeweils in Strömungsrichtung des Zyklons gekrümmt ausgebildet oder stehen vom freien Rand 64 schräg in Strömungsrichtung des Zyklons ab. Da Reinigungsflüssigkeitströpfchen, die über die Überleitelemente vom Schirm 62 an die Innenwand 68 abgeleitet werden, jeweils der Drallwirkung des Zyklons unterliegen, ist bei den nachfolgend beschriebenen Überleitelementen die Gefahr verringerbar, dass sich Reinigungsflüssigkeitströpfchen unter der Drallwirkung von den Überleitelementen ablösen.

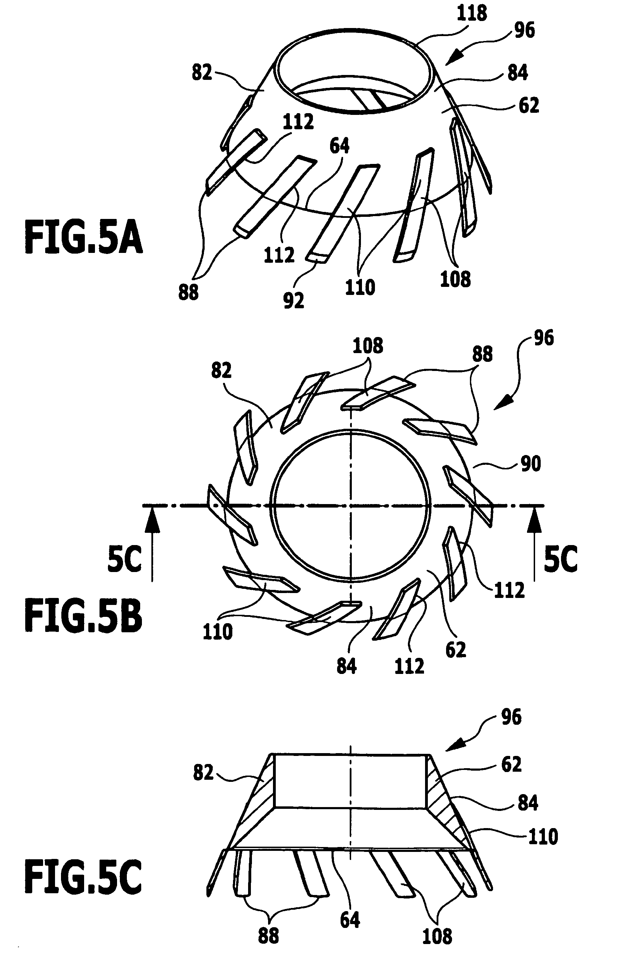

Beispielsweise umfasst die Kombination 96 gemäß den Figuren 5A bis 5C Überleitelemente 108, die wie die Überleitelemente 102 Rippen 110 ausbilden, die über die Oberseite 84 erhaben sind. Infolgedessen bilden die Rippen 110 Kanten 112 zum Ansammeln von Reinigungsflüssigkeitströpfchen, die in ihrer Wirkungsweise den Kanten 106 der Überleitelemente 102 entsprechen, so dass diesbezüglich auf vorstehende Erläuterungen verwiesen werden kann.

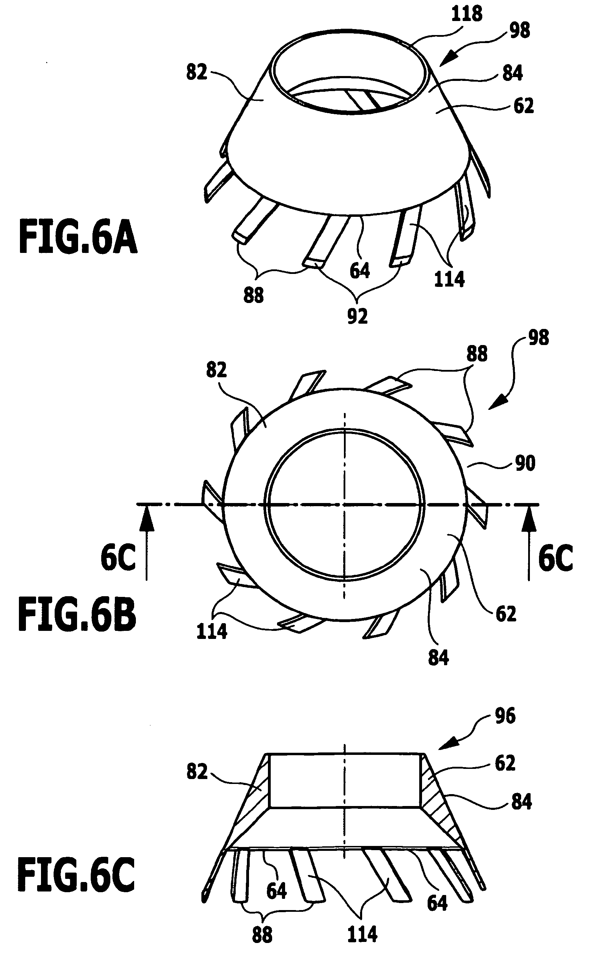

Bei der Kombination 98 gemäß den Figuren 6A bis 6C sind Überleitelemente 114 vorgesehen, die wie die Überleitelemente 86 am freien Rand 64 festgelegt sind und von diesem in Richtung der Innenwand 68 hervorspringen. Im Übrigen ist die Oberseite 84 bei der Kombination 98 ebenso plan ausgestaltet wie die Oberseite 84 bei der Kombination gemäß den Figuren 3A bis 3C, die zuerst beschrieben wurde.

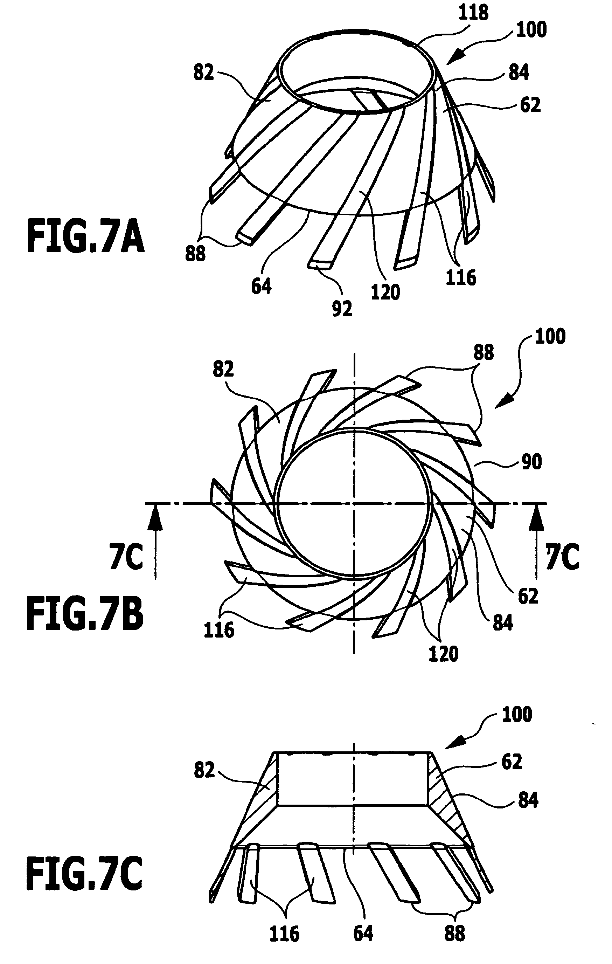

Bei der Kombination 100 gemäß den Figuren 7A bis 7C sind Überleitelemente 116 vorgesehen, die sich ausgehend von einem oberen Rand 118 des Schirms 62 in Richtung der Innenwand 68 spiralförmig erstrecken. Die Überleitelemente 116 sind in die Trennwand 82 eingeformt, wobei sie in Längsrichtung verlaufende Nuten 120 ausbilden. Die Nuten 120 formen Vertiefungen in der Oberseite 84 des Schirmes 62 und erstrecken sich bis zu den freien Enden 88 der Überleitelemente 116. In den Nuten 120 kann Reinigungsflüssigkeit auf der Oberseite 84 des Schirms 62 gesammelt und besonders wirkungsvoll der Innenwand 168 zugeleitet werden, da die Überleitelemente 116 gewissermaßen Kanäle ausbilden.

Auch bei den weiteren Kombinationen aus Schirm und Überleitelementen gemäß den Figuren 3A bis 3C, 4A bis 4C, 5A bis 5C, 6A bis 6C sowie 8A und 8B kann vorgesehen sein, dass die jeweiligen Überleitelemente Nuten umfassen und/oder dass an der Oberseite 84 des Schirms 62 bzw. 144 Nuten gebildet sind.

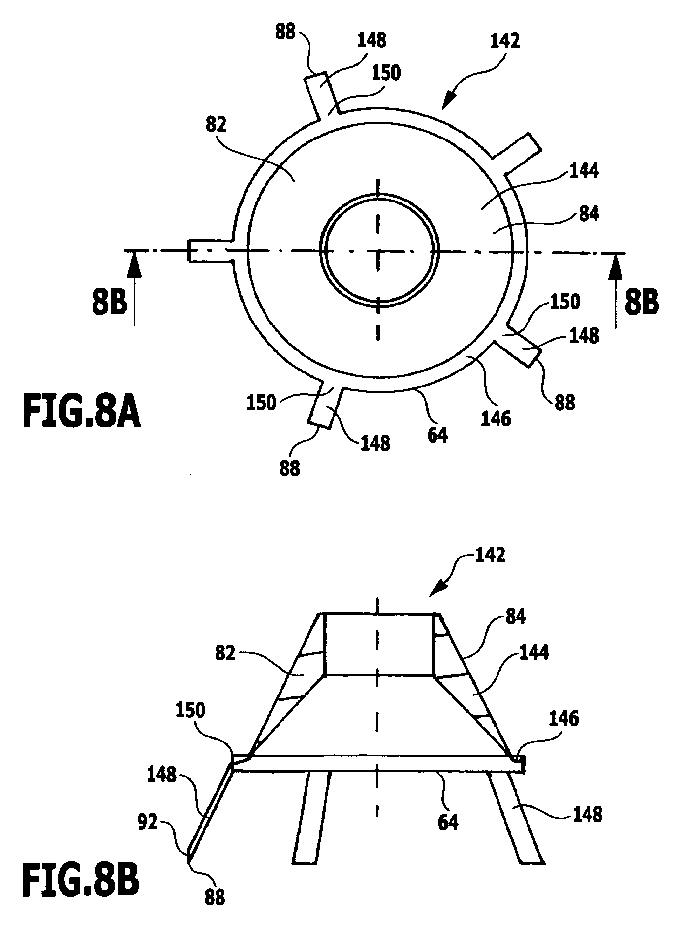

Der Schirm 144 der Kombination 142 in den Figuren 8A und 8B ist einstückig ausgebildet, und er umfasst am freien Rand 64 eine zumindest teilweise und insbesondere vollständig umlaufende Nut 146. Überleitelemente 148 stehen von der Nut 146 in Richtung der Innenwand 68 ab. Am Ansatz jedes der Überleitelemente 148 an der Nut 146 ist am Schirm 144 eine seitliche Ausnehmung 150 gebildet. In der Nut 146 kann Reinigungsflüssigkeit gesammelt, an den Ausnehmungen 150 gezielt an die Überleitelemente 148 abgeführt und über diese der Wandgrenzschichtströmung zugeführt werden.

Es kann vorgesehen sein, dass auch bei den Kombinationen von Schirm 62 mit den jeweiligen Überleitelementen gemäß den Figuren 3A bis 7C am freien Rand 64 eine zumindest teilweise umlaufende Nut vorgesehen ist.

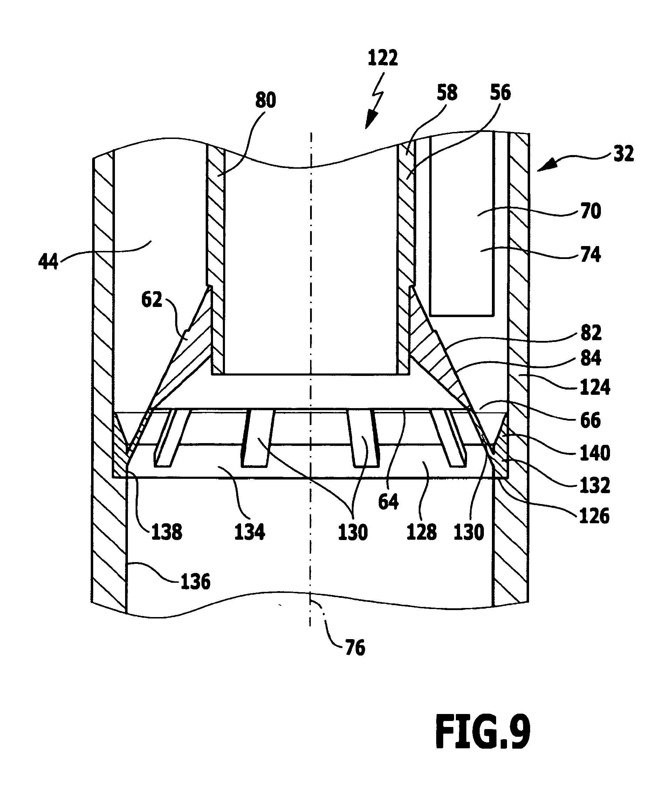

Bei einer in Figur 9 abschnittsweise dargestellten zweiten bevorzugten Ausführungsform eines erfindungsgemäßen Zyklonabscheiders 122 sind Merkmale oder Bauteile, die gleich oder gleichwirkend zu Merkmalen oder Bauteilen des Zyklonabscheiders 18 sind, mit denselben Bezugszeichen belegt. Die mit dem Zyklonabscheider 18 erzielbaren Vorteile sind mit dem Zyklonabscheider 122 ebenfalls erzielbar.

Anders als der Zyklonabscheider 18 umfasst der Zyklonabscheider 122 anstelle der Behälterwand 50 eine Behälterwand 124, die unterhalb des freien Randes 64 innenseitig ein ringförmiges stufiges Anlageelement 126 umfasst. Das Anlageelement 126 bildet eine Ringschulter, auf die eine Halterung 128 für Überleitelemente 130 lösbar aufgesetzt werden kann.

Die Halterung 128 umfasst einen Haltering 132. Auf der der Achse 76 zugewandten Seite weist die Halterung 128 eine Wandung 134 auf, die im Bereich des Halterings 132 mit einer innenseitigen Wandung 136 der Behälterwand 124 fluchtet. Dadurch bildet die Wandung 134 der Halterung 128 abschnittsweise eine Innenwand 138 des Abscheidebehälters 32 des Zyklonabscheiders 122, die im Übrigen von der innenseitigen Wandung 136 gebildet wird.

Der Deckenwand 52 zugewandt umfasst die Halterung 128 einen an den Haltering 132 angeformten Ableitabschnitt 140. Im Bereich des Ableitabschnittes 140 nähert sich die Wandung 134 der Halterung 128 dem oberhalb des Anlageelementes 126 angeordneten Abschnitt der innenseitigen Wandung 136 der Behälterwand 124 an. Die innenseitige Wandung 136 ist oberhalb des stufenförmigen Anlageelementes 126 bezüglich der Drehachse 76 im Verhältnis zu ihrer Lage unterhalb des Anlageelementes 126 radial nach außen versetzt. Beispielsweise hat der Ableitabschnitt 140 die Kontur eines Rotationsparaboloids bezüglich der Achse 76.

Der Ableitabschnitt 140 stellt sicher, dass die Ausbildung des Zyklons und die Wandgrenzschichtströmung durch den Haltering 132 nicht beeinträchtigt werden und Reinigungsflüssigkeit von oberhalb des Halterings 132 dem Reinigungsflüssigkeitsreservoir 78 verbessert zugeführt werden kann.

Von der Wandung 134 stehen die Überleitelemente 130, die mit der Halterung 128 einstückig gebildet sind, in Richtung des freien Randes 64 ab. Wiederum handelt es sich um zehn Stück, die identisch ausgebildet sind und in Umfangsrichtung der Achse 76 gleichmäßig voneinander beabstandet sind. Der Zwischenraum 66 zwischen der Trennwand 82 und der Innenwand 138 wird durch die Überleitelemente 130, die den freien Rand 64 mit ihren freien Enden 88 kontaktieren, vollständig überbrückt. Dies erlaubt es, Reinigungsflüssigkeit von der Oberseite 84 über die Überleitelemente 130 an die Innenwand 138 abzuleiten.

Auch beim Zyklonabscheider 122 kann vorgesehen sein, dass ein Restzwischenraum zwischen den freien Enden der Überleitelemente 130 und dem Schirm 62 maximal 2 Millimeter beträgt. Bei einem derartigen Restzwischenraum zeigt sich in der Praxis, dass Reinigungsflüssigkeit noch von der Oberseite 84 über die Überleitelemente 130 abgeleitet und der Wandgrenzschichtströmung zugeführt werden kann.

Beim Zyklonabscheider 122 ist es möglich, die Halterung 128 dem Innenraum 44 zu entnehmen. Dies erlaubt es auf benutzerfreundliche Weise, die Überleitelemente 130 von Schmutz zu befreien. Nach dem Reinigungsvorgang kann die Halterung 128 erneut in den Abscheidebehälter 32 eingesetzt und anschließend die Absaugleitung 58 mit Schirm 62 in den Innenraum 44 eingeführt werden. Diese Handgriffe sind zügig und einfach durchzuführen, so dass der Zyklonabscheider auch bei der Erstmontage einfach zu handhaben ist.

## Patentansprüche

1. Zyklonabscheider (18; 122) für ein Saugreinigungsgerät (10), insbesondere für ein Sprühextraktionsgerät oder einen Nassstaubsauger, wobei der Zyklonabscheider (18; 122) einen Abscheidebehälter (32) zum Abscheiden eingesaugter Reinigungsflüssigkeit umfasst mit einem Einlass (70), durch den hindurch Saugluft und Reinigungsflüssigkeit unter Ausbildung eines Zyklons in einen Innenraum (44) des Abscheidebehälters (32) einsaugbar sind, eine in den Innenraum (44) eintauchende und an ein Saugaggregat (14) anschließbare Absaugleitung (58) mit einem Auslass (60), durch den hindurch Saugluft aus dem Innenraum (44) absaugbar ist, sowie eine den Auslass (60) gegenüber Reinigungsflüssigkeit abschirmende Trennwand (82), wobei ein Zwischenraum (66) zwischen einer Innenwand (68; 138) des Abscheidebehälters (32) und der Trennwand (82) vorhanden ist, **dadurch gekennzeichnet, dass** der Zyklonabscheider (18; 122) mindestens ein zwischen der Trennwand (82) und der Innenwand (68; 138) angeordnetes Überleitelement (86, 102, 108, 114, 116, 148; 130) zum Überleiten von Reinigungsflüssigkeit von der Trennwand (82) an die Innenwand (68; 138) umfasst, das den Zwischenraum (66) zwischen der Trennwand (82) und der Innenwand (68; 138) bis auf einen maximalen Restzwischenraum von 2 Millimetern überbrückt.

2. Zyklonabscheider nach Anspruch 1, **dadurch gekennzeichnet, dass** die Trennwand (82) eine Wand der Absaugleitung (58) ist.

3. Zyklonabscheider nach Anspruch 1 oder 2, **dadurch gekennzeichnet, dass** das das mindestens eine Überleitelement (86, 102, 108, 114, 116, 148; 130) den Zwischenraum (66) bis auf einen Restzwischenraum von weniger als 2 Millimetern überbrückt.

4. Zyklonabscheider nach einem der voranstehenden Ansprüche, **dadurch gekennzeichnet, dass** das das mindestens eine Überleitelement (86, 102, 108, 114, 116, 148; 130) den Zwischenraum (66) vollständig überbrückt.

5. Zyklonabscheider nach einem der voranstehenden Ansprüche, **dadurch gekennzeichnet, dass** das mindestens eine Überleitelement (86, 102, 108, 114, 116, 148; 130) mindestens ein Kontaktglied (92) zum Kontaktieren der Trennwand (82) und/oder der Innenwand (68; 138) aufweist.

6. Zyklonabscheider nach einem der voranstehenden Ansprüche, **dadurch gekennzeichnet, dass** das mindestens eine Überleitelement (86, 102, 108, 114, 116, 148; 130) streifenförmig ausgebildet ist.

7. Zyklonabscheider nach einem der voranstehenden Ansprüche, **dadurch gekennzeichnet, dass** das mindestens eine Überleitelement (86, 102, 148; 130) geradlinig ausgebildet ist.

8. Zyklonabscheider nach einem der Ansprüche 1 bis 6, **dadurch gekennzeichnet, dass** das mindestens eine Überleitelement (108, 114, 116) eine Krümmung in Strömungsrichtung des Zyklons aufweist.

9. Zyklonabscheider nach einem der voranstehenden Ansprüche, **dadurch gekennzeichnet, dass** das mindestens eine Überleitelement (116) mindestens eine Nut umfasst.

10. Zyklonabscheider nach einem der voranstehenden Ansprüche, **dadurch gekennzeichnet, dass** der Zyklonabscheider (18; 122) eine Mehrzahl von Überleitelementen (86, 102, 108, 114, 116, 148; 130) umfasst.

11. Zyklonabscheider nach Anspruch 10, **dadurch gekennzeichnet, dass** die Überleitelemente (86, 102, 108, 114, 116, 148; 130) identisch ausgebildet sind.

12. Zyklonabscheider nach Anspruch 10 oder 11, **dadurch gekennzeichnet, dass** die Überleitelemente (86, 102, 108, 114, 116, 148; 130) in Umfangsrichtung der Trennwand (82) gleichmäßig voneinander beabstandet sind.

13. Zyklonabscheider nach einem der voranstehenden Ansprüche, **dadurch gekennzeichnet, dass** das mindestens eine Überleitelement (86, 102, 108, 114, 116, 148) an der Trennwand (82) festgelegt ist.

14. Zyklonabscheider nach Anspruch 13, **dadurch gekennzeichnet, dass** das mindestens eine Überleitelement (86, 102, 108, 114, 116, 148) an einem freien Rand der Trennwand (82) festgelegt ist.

15. Zyklonabscheider nach einem der voranstehenden Ansprüche, **dadurch gekennzeichnet, dass** die Trennwand (82) einen sich in Eintauchrichtung der Absaugleitung (58) in den Innenraum (44) im Umfang erweiternden Schirm (62, 144) umfasst oder ausbildet.

16. Zyklonabscheider nach Anspruch 15, **dadurch gekennzeichnet, dass** das mindestens eine Überleitelement (86, 102, 108, 114, 116, 148) sich in Verlängerung des Schirmes (62, 144) in Richtung der Innenwand (68; 138) erstreckend ausgebildet ist.

17. Zyklonabscheider nach einem der Ansprüche 1 bis 12, 15 oder 16, **dadurch gekennzeichnet, dass** das mindestens eine Überleitelement (130) an der Innenwand (138) festgelegt ist.

18. Zyklonabscheider nach Anspruch 17, **dadurch gekennzeichnet, dass** der Zyklonabscheider (122) eine die Innenwand (138) abschnittsweise ausbildende Halterung (128) für das mindestens eine Überleitelement (130) umfasst, die in den Abscheidebehälter (32) lösbar einsetzbar ist.

19. Saugreinigungsgerät, umfassend mindestens einen Zyklonabscheider (18; 122) nach einem der voranstehenden Ansprüche.

## Claims

1. Cyclone separator (18; 122) for a suction cleaning appliance (10), in particular, for a spray extraction appliance or a wet vacuum cleaner, the cyclone separator (18; 122) comprising a separating container (32) for separating cleaning liquid drawn in by suction, with an inlet (70) through which suction air and cleaning liquid can be drawn by suction into an interior (44) of the separating container (32), thereby forming a cyclone, a suction extraction line (58) extending into the interior (44) and connectable to a suction unit (14), with an outlet (60) through which suction air can be drawn out of the interior (44) by suction, and a partition wall (82) shielding the outlet (60) from cleaning liquid, a space (66) being provided between an inner wall (68; 138) of the separating container (32) and the partition wall (82), **characterized in that** the cyclone separator (18; 122) comprises at least one transfer element (86, 102, 108, 114, 116, 148; 130) arranged between the partition wall (82) and the inner wall (68; 138) for transferring cleaning liquid from the partition wall (82) to the inner wall (68; 138), the transfer element bridging the space (66) between the partition wall (82) and the inner wall (68; 138) except for a maximum remaining space of 2 millimeters.

2. Cyclone separator in accordance with claim 1, **characterized in that** the partition wall (82) is a wall of the suction extraction line (58).

3. Cyclone separator in accordance with claim 1 or 2, **characterized in that** the at least one transfer element (86, 102, 108, 114, 116, 148; 130) bridges the space (66) except for a remaining space of less than 2 millimeters.

4. Cyclone separator in accordance with any one of the preceding claims, **characterized in that** the at least one transfer element (86, 102, 108, 114, 116, 148; 130) bridges the space (66) completely.

5. Cyclone separator in accordance with any one of the preceding claims, **characterized in that** the at least one transfer element (86, 102, 108, 114, 116, 148; 130) comprises at least one contact member (92) for contacting the partition wall (82) and/or the inner wall (68; 138).

6. Cyclone separator in accordance with any one of the preceding claims, **characterized in that** the at least one transfer element (86, 102, 108, 114, 116, 148; 130) is of strip-shaped configuration.

7. Cyclone separator in accordance with any one of the preceding claims, **characterized in that** the at least one transfer element (86, 102, 148; 130) is of straight-lined configuration.

8. Cyclone separator in accordance with any one of claims 1 to 6, **characterized in that** the at least one transfer element (108, 114, 116) has a curvature in the direction of flow of the cyclone.

9. Cyclone separator in accordance with any one of the preceding claims, **characterized in that** the at least one transfer element (116) comprises at least one groove.

10. Cyclone separator in accordance with any one of the preceding claims, **characterized in that** the cyclone separator (18; 122) comprises a plurality of transfer elements (86, 102, 108, 114, 116, 148; 130).

11. Cyclone separator in accordance with claim 10, **characterized in that** the transfer elements (86, 102, 108, 114, 116, 148; 130) are of identical configuration.

12. Cyclone separator in accordance with claim 10 or 11, **characterized in that** the transfer elements (86, 102, 108, 114, 116, 148; 130) are uniformly spaced from one another in the circumferential direction of the partition wall (82).

13. Cyclone separator in accordance with any one of the preceding claims, **characterized in that** the at least one transfer element (86, 102, 108, 114, 116, 148) is fixed to the partition wall (82).

14. Cyclone separator in accordance with claim 13, **characterized in that** the at least one transfer element (86, 102, 108, 114, 116, 148) is fixed to a free rim of the partition wall (82).

15. Cyclone separator in accordance with any one of the preceding claims, **characterized in that** the partition wall (82) comprises or forms a shield (62, 144) which widens in its circumference in the direction in which the suction extraction line (58) extends into the interior (44).

16. Cyclone separator in accordance with claim 15, **characterized in that** the at least one transfer element (86, 102, 108, 114, 116, 148) is configured so as to extend as an extension of the shield (62, 144) in the direction of the inner wall (68; 138).

17. Cyclone separator in accordance with any one of claims 1 to 12, 15 or 16, **characterized in that** the at least one transfer element (130) is fixed to the inner wall (138).

18. Cyclone separator in accordance with claim 17, **characterized in that** the cyclone separator (122) comprises a holder (128) for the at least one transfer element (130), the holder (128) forming a section of the inner wall (138) and being releasably insertable into the separating container (32).

19. Suction cleaning appliance, comprising at least one cyclone separator (18; 122) in accordance with any one of the preceding claims.

## Revendications

1. Séparateur à cyclone (18; 122) pour un appareil de nettoyage par aspiration (10), notamment un appareil injecteur-extracteur ou un aspirateur eau-poussière, le séparateur à cyclone (18; 122) comprenant un réservoir de séparateur (32), qui est destiné à la séparation de liquide de nettoyage aspiré, et qui comporte une entrée (70) à travers laquelle peuvent être aspirés de l'air d'aspiration et du liquide de nettoyage dans un espace intérieur (44) du réservoir de séparateur (32), en formant un cyclone,
une conduite d'aspiration (58) s'engageant dans l'espace intérieur (44) et pouvant être reliée à une unité d'aspiration (14), et présentant une sortie (60) à travers laquelle de l'air d'aspiration peut être aspiré de l'espace intérieur (44),
ainsi qu'une paroi de séparation (82) assurant un écran de protection pour la sortie (60) à l'encontre du liquide de nettoyage, un espace intermédiaire (66) existant entre une paroi intérieure (68; 138) du réservoir de séparateur (32) et la paroi de séparation (82),
**caractérisé en ce que** le séparateur à cyclone (18; 122) comprend au moins un élément de transition (86, 102, 108, 114, 116, 148; 130), qui est agencé entre la paroi de séparation (82) et la paroi intérieure (68; 138), et est destiné à transférer de liquide de nettoyage de la paroi de séparation (82) à la paroi intérieure (68; 138), et qui assure un pontage de l'espace intermédiaire (66) entre la paroi de séparation (82) et la paroi intérieure (68; 138), excepté un espace intermédiaire résiduel maximal de 2 millimètres.

2. Séparateur à cyclone selon la revendication 1, **caractérisé en ce que** la paroi de séparation (82) est une paroi de la conduite d'aspiration (58).

3. Séparateur à cyclone selon la revendication 1 ou la revendication 2, **caractérisé en ce que** ledit au moins un élément de transition (86, 102, 108, 114, 116, 148; 130) assure un pontage de l'espace intermédiaire (66), excepté un espace intermédiaire résiduel de moins de 2 millimètres.

4. Séparateur à cyclone selon l'une des revendications précédentes, **caractérisé en ce que** ledit au moins un élément de transition (86, 102, 108, 114, 116, 148; 130) assure un pontage total de l'espace intermédiaire (66).

5. Séparateur à cyclone selon l'une des revendications précédentes, **caractérisé en ce que** ledit au moins un élément de transition (86, 102, 108, 114, 116, 148; 130) présente au moins un organe de contact (92) pour contacter la paroi de séparation (82) et/ou la paroi intérieure (68; 138).

6. Séparateur à cyclone selon l'une des revendications précédentes, **caractérisé en ce que** ledit au moins un élément de transition (86, 102, 108, 114, 116, 148; 130) est réalisé sous forme de bande.

7. Séparateur à cyclone selon l'une des revendications précédentes, **caractérisé en ce que** ledit au moins un élément de transition (86, 102, 148; 130) est rectiligne.

8. Séparateur à cyclone selon l'une des revendications 1 à 6, **caractérisé en ce que** ledit au moins un élément de transition (108, 114, 116) présente une courbure dans la direction d'écoulement du cyclone.

9. Séparateur à cyclone selon l'une des revendications précédentes, **caractérisé en ce que** ledit au moins un élément de transition (116) présente au moins une rainure.

10. Séparateur à cyclone selon l'une des revendications précédentes, **caractérisé en ce que** le séparateur à cyclone (18; 122) comprend une pluralité d'éléments de transition (86, 102, 108, 114, 116, 148; 130).

11. Séparateur à cyclone selon la revendication 10, **caractérisé en ce que** les éléments de transition (86, 102, 108, 114, 116, 148; 130) sont de configuration identique.

12. Séparateur à cyclone selon la revendication 10 ou la revendication 11, **caractérisé en ce que** les éléments de transition (86, 102, 108, 114, 116, 148; 130) sont espacés de manière régulière les uns des autres dans la direction périphérique de la paroi de séparation (82).

13. Séparateur à cyclone selon l'une des revendications précédentes, **caractérisé en ce que** ledit au moins un élément de transition (86, 102, 108, 114, 116, 148) est fixé à la paroi de séparation (82).

14. Séparateur à cyclone selon la revendication 13, **caractérisé en ce que** ledit au moins un élément de transition (86, 102, 108, 114, 116, 148) est fixé à un bord libre de la paroi de séparation (82).

15. Séparateur à cyclone selon l'une des revendications précédentes, **caractérisé en ce que** la paroi de séparation (82) comprend ou forme un écran (62, 144) s'évasant quant à sa périphérie, dans la direction dans laquelle la conduite d'aspiration (58) s'engage dans l'espace intérieur (44).

16. Séparateur à cyclone selon la revendication 15, **caractérisé en ce que** ledit au moins un élément de transition (86, 102, 108, 114, 116, 148) est réalisé de manière à s'étendre en prolongement de l'écran (62, 144) en direction de la paroi intérieure (68; 138).

17. Séparateur à cyclone selon l'une des revendications 1 à 12, 15 ou 16, **caractérisé en ce que** ledit au moins un élément de transition (130) est fixé à la paroi intérieure (138).

18. Séparateur à cyclone selon la revendication 17, **caractérisé en ce que** le séparateur à cyclone (122) comprend un support de maintien (128), qui est destiné au dit au moins un élément de transition (130), qui forme partiellement la paroi intérieure (138), et qui peut être inséré de manière amovible dans le réservoir de séparateur (32).

19. Appareil de nettoyage par aspiration, comprenant au moins un séparateur à cyclone (18; 122) selon l'une des revendications précédentes.
